# EUROPÄISCHE PATENTSCHRIFT

(11) **EP 3 441 154 B1**
(45) Veröffentlichungstag und Bekanntmachung des Hinweises auf die Patenterteilung: **24.06.2020**
(21) Anmeldenummer: 18167965.5
(22) Anmeldetag: 18.04.2018
(51) Int. Cl.: B21D 28/06

(54) **VERFAHREN ZUM GEGENSEITIGEN TRENNEN ZWEIER WERKSTÜCKTEILE EINES PLATTENFÖRMIGEN MATERIALS SOWIE GREIFEINRICHTUNG FÜR EINE HANDLINGSVORRICHTUNG UND HANDLINGSVORRICHTUNG EINER BEARBEITUNGSMASCHINE**
METHOD OF MUTUALLY SEPARATING TWO WORK PIECE SECTIONS OF A PLATE-SHAPED MATERIAL AND GRIPPING DEVICE FOR A HANDLING DEVICE AND HANDLING DEVICE OF A PROCESSING MACHINE
PROCÉDÉ PERMETTANT DE SÉPARER DEUX PARTIES D'UN COMPOSANT EN FORME DE PLAQUE, DISPOSITIF DE PRÉHENSION POUR UN DISPOSITIF DE MANIPULATION ET DISPOSITIF DE MANIPULATION POUR UNE MACHINE DE TRAITEMENT

(30) Priorität: 30.06.2017 DE 102017114728
(43) Veröffentlichungstag der Anmeldung: 13.02.2019
(73) Patentinhaber: TRUMPF Werkzeugmaschinen GmbH + Co. KG, 71254 Ditzingen (DE)
(72) Erfinder: Klinkhammer, Marc, 71254 Ditzingen (DE); Ockenfuss, Simon, 71034 Böblingen (DE)
(74) Vertreter: Mammel und Maser

(56) Entgegenhaltungen:
- DE-A1-102014 209 811
- JP-A- H04 339 704
- JP-A- 2005 334 888
- US-A1- 2004 050 225
- US-A1- 2016 082 615

## Beschreibung

Die Erfindung betrifft ein Verfahren zum gegenseitigen Trennen zweier Werkstückteile eines plattenförmigen Materials, insbesondere eines Bleches, sowie eine Greifeinrichtung für eine Handlingsvorrichtung einer Bearbeitungsmaschine für solche plattenförmigen Werkstücke gemäß dem Oberbegriff der Ansprüche 1 und 5 (siehe z.B. DE 10 2014 209 811 A1), als auch eine Handlingsvorrichtung für eine Bearbeitungsmaschine, siehe Anspruch 11.

Aus der JP H04-339 704 A ist eine Greifeinrichtung bekannt, welche eine Greifplatte umfasst, an der schwenkbar ansteuerbare Greifelemente vorgesehen sind. Benachbart dazu sind Saugelemente vorgesehen. Getrennt zu den Saugelementen sind an der Greifplatte Drückelemente vorgesehen. Durch diese Greifeinrichtung kann ein Container mit plattenförmigem Material bestückt werden sowie ein Schließen des Containers mit einem oberen Behälterteil erfolgen.

Aus der US 2016/0082615 A1 ist eine Vorrichtung zur Handhabung eines plattenförmigen Materials bekannt, welche eine Greifeinrichtung umfasst, wobei an einer ersten Greifplatte mehrere als Sauger ausgebildete Halteelemente vorgesehen sind. Dieser ersten Greifplatte ist eine zweite Greifplatte mit mehreren Halteelementen als Saugelemente zugeordnet. Die erste Greifplatte ist relativ zur zweiten Greifplatte verfahrbar, so dass das eine Werkstückteil von einem Restteil getrennt werden kann.

Aus der DE 10 2014 209 811 A1 ist eine Vorrichtung und ein Verfahren zum gegenseitigen Trennen von zwei Werkstückteilen eines plattenförmigen Werkstücks bekannt. Auf eine Oberseite der zu trennenden Werkstückteile wird ein Greifelement bestehend aus Vakuumsaugern aufgesetzt. Einer Unterseite der zu trennenden Werkstückteile werden Auswerfer zugeordnet. Beim Ausfahren der Auswerfer und gleichzeitigem Anheben der Greifelemente erfolgt ein Trennen des einen Werkstückteils von dem anderen.

Aus der DE 35 09 418 A1 ist eine Greifeinrichtung zur Entnahme von Werkstücken bekannt, welche durch eine Erodiermaschine hergestellt sind. Diese Greifeinrichtung weist ein Greiforgan auf, welches beispielsweise ein Elektromagnet, ein mechanischer Greifer oder ein Saugsystem sein kann. Dieses Greiforgan ist für konische Teile mit einer Konusöffnung nach oben vorgesehen, sodass das Greiforgan an dem konischen Teil angreift und dieses gegenüber dem Restteil nach oben abheben kann. Zum Entfernen des konischen Teils von dem Greiforgan, welches ein Ausfallstück beziehungsweise Abfallstück ist, wird beim Einsatz von einem Elektromagneten als Greiforgan ein Stößel betätigt, der in Z-Richtung bewegbar ist, um ein Trennen des Ausfallteils vom elektromagnetischen Greiforgan sicherzustellen.

Aus der EP 1 967 301 A1 ist eine maschinelle Anordnung zum Bearbeiten von plattenartigen Werkstücken mit einer Bearbeitungseinrichtung sowie eine Handlingsvorrichtung für die plattenartigen Werkstücke bekannt. Diese Handlingsvorrichtung weist eine Tragstruktur auf, an der mehrere Greifeinrichtungen zueinander verfahrbar vorgesehen sind. Diese Greifeinrichtungen bestehen aus Saugplatten, welche mehrere Saugelemente umfassen, die in einzelne Saugfelder untergliedert sind. Diese einzelnen Saugfelder können unabhängig voneinander aktiviert oder deaktiviert werden. Durch eine solche Handlingsvorrichtung werden plattenförmige Werkstücke, insbesondere ein Rohmaterial, von einem Stapel der Bearbeitungsmaschine zugeführt und auf einer Werkstückauflage aufgelegt. Ebenso können mit einer solchen Handlingsvorrichtung auf der Werkstückauflage aufliegende Gutteile, die von einem Restgitter getrennt sind, und das Restgitter entfernt und beispielsweise einem Magazin zugeführt werden.

Zur Trennung von Werkstücken, die aus einem plattenförmigen Material in einer Bearbeitungsmaschine hergestellt sind, geht aus der DE 196 16 204 A1 eine Aufhebevorrichtung hervor. Das zu entnehmende Werkstück, also das Entnahmeteil, wird mittels einer Kamera erfasst. Darauffolgend werden einzelne in der Werkstückauflage vorgesehene Stifte angesteuert, sodass diese eine Ausfahrbewegung gegenüber der Werkstückauflageebene senkrecht nach oben durchführen, sodass darauffolgend mit einer separaten Handlingsvorrichtung, beispielsweise einem Mehrachsenroboter, das Entnahmeteil entnommen werden kann. Bei einem zu engen Schnittspalt und/oder einer zu rauen Schnittfläche und/oder schlechten Schnittqualität kann es zu Verhakungen während der Aushebebewegung nach oben zwischen dem Entnahmeteil und dem Restgitter kommen.

Aus der DE 10 2014 209 811 A1 sind eine Vorrichtung und ein Verfahren zum gegenseitigen Trennen zweier Werkstückteile eines plattenförmigen Werkstücks bekannt. Dabei werden unterhalb des Entnahmeteils eine Aushebevorrichtung und oberhalb des Entnahmeteils ein Gegenhalter positioniert. Der Gegenhalter umfasst Saugelemente, die auf dem auszuhebenden Entnahmeteil aufgesetzt und danach aktiviert werden. Anschließend werden durch die Aushebevorrichtung Stifte von unten nach oben ausgefahren, um das Entnahmeteil nach oben zu bewegen, wobei gleichzeitig der Gegenhalter nach oben abgehoben wird, um das Entnahmeteil zwischen dem Gegenhalter und den Stiften gehalten senkrecht gegenüber dem Restteil nach oben auszuheben.

Der Erfindung liegt die Aufgabe zugrunde, ein Verfahren zum gegenseitigen Trennen zweier Werkstückteile eines plattenförmigen Materials sowie eine Greifeinrichtung als auch eine Handlingsvorrichtung für eine Bearbeitungsmaschine vorzuschlagen, durch welche eine erhöhte Prozesssicherheit beim Separieren der Werkstückteile ermöglicht ist, insbesondere eine Erhöhung der Prozesssicherheit beim Ausschleußen von zu trennenden Werkstückteilen durch ein Tischsegment in einer Werkstückauflage nach unten und/oder beim Sortieren von mehreren zu trennenden Werkstückteilen bei einer Mehrteileentnahme von einer Werkstückauflage der Bearbeitungsmaschine.

Ein Verfahren zum gegenseitigen Trennen zweier Werkstückteile eines plattenförmigen Materials, insbesondere eines Bleches, gemäß der Erfindung ist im Anspruch 1 definiert.

Dieses Verfahren erhöht die Prozesssicherheit bei den zu trennenden Werkstückteilen. Des Weiteren ist eine Vereinfachung im Ablauf der Lösestrategie gegeben. Eines der beiden zu trennenden Werkstückteile wird während dem Trennvorgang durch die Halteelemente fixiert gehalten. Das andere Werkstückteil wird mittels der Drückelemente von dem fixiert gehaltenen Werkstückteil gelöst. Dadurch lässt sich ein einfaches Ausheben des zu trennenden Werkstückteils beziehungsweise des Entnahmeteils von dem anderen Werkstückteil beziehungsweise dem Restteil durchführen. Durch die Relativbewegung der Drückelemente zu den Halteelementen, welche das eine Werkstückteil gegenüber dem zu trennenden Werkstückteil fixiert halten, können bei einem Verhaken der zu trennenden Werkstückteile diese dennoch sicher gelöst werden, sodass eine prozesssichere Automatisierung ermöglicht wird. Auch können mehrere Entnahmeteile und/oder Restteile gleichzeitig voneinander getrennt oder gleichzeitig entnommen und darauffolgend getrennt werden.

Bevorzugt werden das Entnahmeteil oder das Restteil mit den Halteelementen der Greifeinrichtung fixiert gehalten und eine Anhebebewegung der Greifeinrichtung senkrecht zur Werkstückauflage angesteuert sowie vor oder während dem Anheben der Greifeinrichtung die Drückelemente ausgefahren, sodass das durch die Halteelemente nicht fixierte Werkstückteil durch die Drückelemente zur Werkstückauflage niedergehalten wird. Dieses Verfahren ermöglicht, dass nur die Positionierung einer Greifeinrichtung oberhalb der zu trennenden Werkstückteile erforderlich ist, um darauffolgend eine Lösestrategie durchzuführen. Diese Lösestrategie kann dahingehend erfolgen, dass beispielsweise das Entnahmeteil, welches auch ein Gutteil sein kann, nach oben abgehoben wird und das Restteil, welches ein Restgitter sein kann, auf der Werkstückauflage verbleibt. Mehrere Entnahmeteile können somit nacheinander von der Werkstückauflage entnommen werden. Somit ist eine gesicherte Mehrteileentnahme ermöglicht. Alternativ kann auch die Greifeinrichtung an dem Restteil, wie beispielsweise dem Restgitter, angreifen und dieses gegenüber der Werkstückauflage abheben, sodass das oder die Entnahmeteile, wie beispielsweise Gutteile, auf der Werkstückauflage verbleiben und nachfolgend manuell entnommen oder maschinell abtransportiert und gegebenenfalls gleichzeitig sortiert werden können.

Gemäß der Erfindung wird das von der Halteeinrichtung gehaltene Entnahmeteil oder Restteil in ein Magazin oder zu einer weiteren Arbeitsstation übergeführt. Dadurch kann ein sicheres hauptzeitparalleles Abtransportieren des Entnahmeteils oder Restteils erfolgen. Ebenso kann ein sicheres hauptzeitparalleles Sortieren und Ablegen der Werkstückteile ermöglicht sein.

Eine weitere vorteilhafte Ausgestaltung des Verfahrens ermöglicht ein sicheres Ausschleusen vom Entnahmeteil oder Restteil durch ein nach unten in der Werkstückauflagefläche absenkbares oder nach unten klappbares Tischsegment. Für ein solches Verfahren wird das Entnahmeteil oder das Restteil zum Tischsegment in der Werkstückauflage positioniert. Vorteilhafterweise wird mittels einer der Werkstückauflage zugeordneten Halteeinrichtung das plattenförmige Werkstück in der Ebene der Werkstückauflage zumindest entlang einer Achse, insbesondere einer X-Achse, verfahren, sodass dieses zum Tischsegment positioniert werden kann. Die Greifeinrichtung wird oder ist bevorzugt oberhalb dem Entnahmeteil oder Restteil positioniert. Insbesondere werden die Drückelemente zu dem nach unten ausschleusenden Werkstückteil ausgerichtet und vorzugsweise auf der Oberseite des auszuschleusenden Werkstückteils aufgelegt. Anschließend wird das Tischsegment nach unten abgesenkt, und das oder die Drückelemente werden aktiviert. Die Drückelemente können auch schon vor dem Absenken des Tischsegments aktiviert werden. In diesem Fall werden die Drückelemente nach unten ausgefahren, sodass das auszuschleusende Werkstückteil nach unten abgedrückt oder nach unten gegenüber dem anderen Werkstückteil ausgedrückt wird.

Bevorzugt werden bei dem vorgenannten Verfahren nach dem Positionieren der Greifeinrichtung zu dem auszuschleusenden Entnahmeteil oder Restteil die Halteelemente an dem nicht auszuschleusenden Werkstückteil angesetzt, insbesondere aufgesetzt, und aktiviert, sodass das nicht auszuschleusende Werkstückteil durch die Halteelemente fixiert gehalten wird. Die Ausfahrbewegung der Drückelemente kann vor, während oder nach dem Absenken des Tischsegments angesteuert werden.

Die Ansteuerung für die Ausfahrbewegung der Drückelemente kann vor oder gleichzeitig mit dem Absenken des Tischsegmentes erfolgen oder auch erst dann angesteuert werden, wenn das Tischsegment vollständig abgesenkt ist.

Eine Greifeinrichtung für eine Handlingsvorrichtung einer Bearbeitungsmaschine für plattenförmige Werkstücke gemäß der Erfindung ist im Anspruch 5 definiert. Dadurch wird ermöglicht, dass die Greifeinrichtung eines der zu trennenden Werkstückteile, also das Entnahmeteil oder das Restteil, mittels dem oder den Halteelementen hält, wobei das oder die Drückelemente das andere zu trennende Werkstückteil gegenüber dem durch das zumindest eine Halteelement fixiert gehaltenen Werkstückteil löst. Somit kann durch die Greifeinrichtung, welche an dem zumindest einen zu trennenden Werkstückteil angreift, eine prozesssichere Lösestrategie durchgeführt werden.

Vorteilhafterweise ist jedes Drückelement und jedes Halteelement unabhängig voneinander und separat ansteuerbar. Dadurch kann eine flexible Anpassung an die Geometrie des Entnahmeteils zum Restteil ermöglicht sein, um einem möglichen Verhaken beim Trennen entgegenzuwirken.

Bei der Greifeinrichtung gemäß der Erfindung ist im Halteelement ein Drückelement integriert. Dadurch entspricht die Anzahl der Drückelemente der Anzahl der Halteelemente, wobei die Angriffsfläche der Halteelemente und der Drückelemente an den zu trennenden Werkstückteilen quasi gleich ist. Dabei erfolgt die Ansteuerung des oder der Halteelemente und des oder der Drückelemente vorzugsweise mittels eines Ventils.

Des Weiteren ist gemäß der Erfindung alternativ bei einer Gruppe mit einer vorgegebenen Anzahl von Halteelementen in einem Greiffeld der Greifplatte ein Halteelement durch ein Drückelement ersetzt. Auch dadurch kann ein gezieltes Trennen vom Entnahmeteil zum Restteil ermöglicht sein.

Eine weitere vorteilhafte Ausgestaltung der Greifeinrichtung sieht vor, dass zwei oder mehrere Greifplatten in einer Greifebene relativ zueinander mit einer Führungseinrichtung verfahrbar sind und die Greiffläche vergrößerbar oder die Greifposition der Greiffläche zueinander veränderbar sind. Insbesondere bei großflächigen Entnahmeteilen können dadurch eine einfache und prozesssichere Ansteuerung der Greifeinrichtung und ein darauffolgendes Trennen der Teile ermöglicht sein.

Vorteilhafterweise ist die Greifplatte der Greifeinrichtung als Greifleiste ausgebildet, welche wenigstens eine Reihe von Halteelementen und eine Reihe von Drückelementen umfasst. Dabei kann beispielsweise an bereits bestehenden Greifplatten eine Leiste aus Drückelementen ergänzt werden, um die Lösestrategie der Greifeinrichtung durchzuführen, indem die Halteelemente eines der zu trennenden Teile fixieren und die Drückelemente das andere Teil ausheben oder ausdrücken.

Die Greifeinrichtung weist bevorzugt Saugelemente als Halteelemente auf. Diese Saugelemente sind insbesondere als Vakuumsauger ausgebildet, welche jeweils mit einem Ventil ansteuerbar sind.

Die Saugelemente bestehen bevorzugt aus einem elastischen Kunststoffbalg.

Die Drückelemente sind bevorzugt als ausfahrbare Stifte oder Hülsen ausgebildet. Zur Ansteuerung kann jeweils ein Ventil einem Drückelement zugeordnet sein. Bevorzugt können die Saugelemente durch Vakuum und die Drückelemente durch Blasluft oder Druckluft angesteuert werden. Dies kann auch umgekehrt erfolgen. Auch kann das Vakuum mittels Blasluft und einer Venturi-Düse erzeugt werden. Auch kann die Ausfahrbewegung des oder der Drückelemente mit Vakuum erzeugt werden, sofern ein einfach wirkender Zylinder für die Ausfahrbewegung der Drückelemente vorgesehen ist und angesteuert wird.

Eine Handlingsvorrichtung für eine Bearbeitungsmaschine gemäß der Erfindung ist im Anspruch 11 definiert.

Die Erfindung sowie weitere vorteilhafte Ausführungsformen und Weiterbildungen derselben werden im Folgenden anhand der in den Zeichnungen dargestellten Beispiele näher beschrieben und erläutert. Es zeigen:
Figur 1 eine perspektivische Ansicht einer Bearbeitungsmaschine für plattenförmige Werkstücke,
Figur 2 eine perspektivische Ansicht von unten auf eine Greifeinrichtung mit Halteelementen,
Figur 3 eine perspektivische Ansicht von unten auf die Greifeinrichtung gemäß Figur 2 mit ausgefahrenen Drückelementen,
Figur 4 eine schematische Ansicht einer ersten alternativen Form der Greifeinrichtung zu Figur 2,
Figur 5 eine schematische Ansicht einer alternativen Ausführungsform zu Figur 2,
Figur 6 eine schematische Ansicht einer weiteren alternativen Form zu Figur 2,
Figur 7 eine perspektivische Ansicht einer weiteren alternativen Form zu Figur 2,
Figuren 8a und 8b schematische Ansichten zum prozesssicheren Ausschleusen der Werkstückteile über ein nach unten absenkbares Tischsegment in einer Werkstückauflage,
Figur 9 eine perspektivische Ansicht der Greifeinrichtung gemäß Figur 2 in einer ersten Arbeitsposition,
Figur 10 eine perspektivische Ansicht der Greifeinrichtung gemäß Figur 9 nach dem Trennen der Teile,
Figur 11 eine perspektivische Ansicht der Greifeinrichtung gemäß Figur 9 mit einer alternativen Lösestrategie,
Figur 12 eine schematische Ansicht einer alternativen Bearbeitungsmaschine zu Figur 1, und
Figur 13 eine perspektivische Ansicht der Bearbeitungsmaschine gemäß Figur 9 mit einer alternativen Lösestrategie und
Figur 14 eine schematische Ansicht einer weiteren alternativen Bearbeitungsmaschine zu Figur 1.

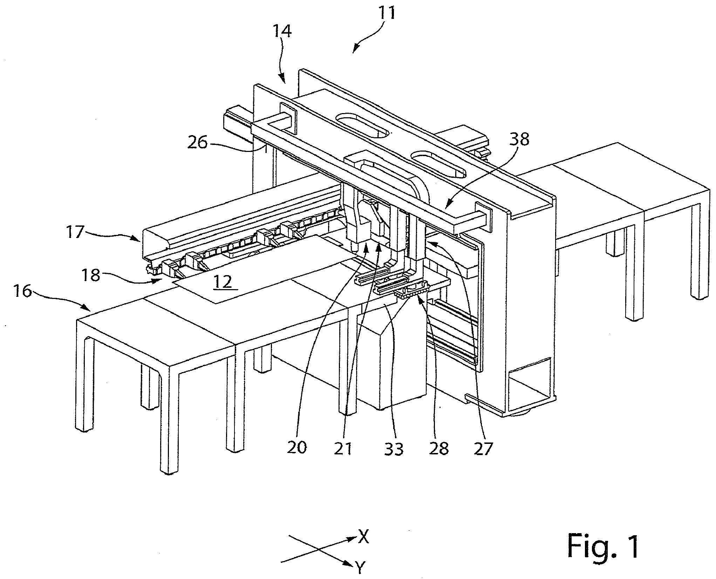

In Figur 1 ist perspektivisch eine Bearbeitungsmaschine 11 dargestellt. Diese Bearbeitungsmaschine 11 ist beispielsweise eine Hybridbearbeitungsmaschine. Diese Hybridbearbeitungsmaschine ermöglicht sowohl eine Laserbearbeitung als auch eine Stanzbearbeitung von plattenförmigen Werkstücken 12. Alternativ kann die Bearbeitungsmaschine 11 auch nur eine Laserschneidbearbeitungsmaschine oder nur eine Stanzbearbeitungsmaschine sein. Diese Bearbeitungsmaschine 11 weist einen geschlossenen Grundkörper 14, insbesondere einen umlaufenden Rahmen, auf, der sich vorzugsweise in Y-Richtung erstreckt. Diesen Rahmen 14 durchquert eine Werkstückauflage 16, welche sich in X-Richtung erstreckt. Parallel zur Werkstückauflage 16 erstreckt sich eine Halteeinrichtung 17, welche vorzugsweise Klammern 18 umfasst. Durch diese Klammern 18 kann das plattenförmige Werkstück 12 gehalten und beispielsweise in X-Richtung der Werkstückebene (X/Y-Ebene) verfahren werden. Zur Bearbeitung des plattenförmigen Werkstücks 12 kann ein Laserbearbeitungskopf 20 und/oder ein Stanzbearbeitungskopf 21 entlang der Y-Achse innerhalb des Rahmens 14 verfahrbar angesteuert werden. Hierzu sind für den Laserbearbeitungskopf 20 und den Stanzbearbeitungskopf 21 jeweils unabhängig voneinander ansteuerbare und nicht näher dargestellte Linearantriebe vorgesehen.

Sofern die Bearbeitungsmaschine 11 einen Laserbearbeitungskopf 20 aufweist, ist in der Werkstückauflage 16 eine Auffangvorrichtung vorgesehen, welche sich in Y-Richtung erstreckt und unterhalb der Verfahrachse des Laserbearbeitungskopfes 20 vorgesehen ist.

Sofern die Bearbeitungsmaschine 11 einen Stanzbearbeitungskopf 21 aufweist, ist unterhalb der Werkstückauflage 16 ein Unterwerkzeug, insbesondere eine Stanzmatrize, vorgesehen, welche vorzugsweise entsprechend dem Stanzbearbeitungskopf 21, vorzugsweise in Y-Richtung, verfahrbar ist.

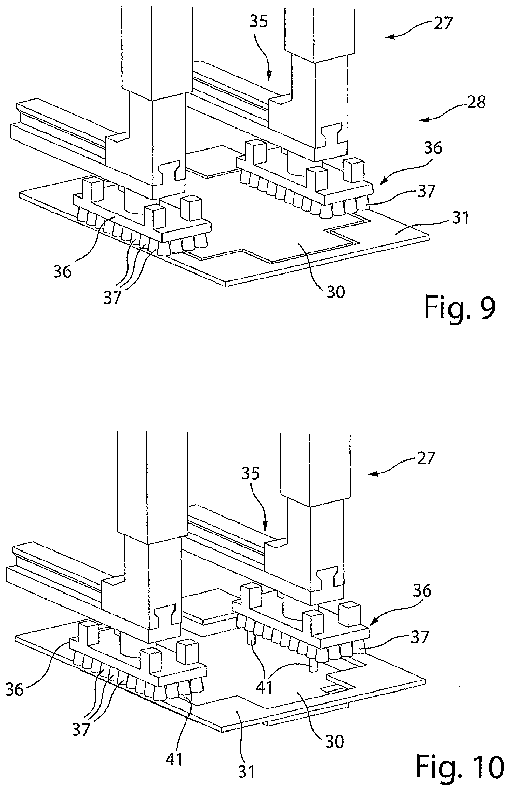

Die Bearbeitungsmaschine 11 weist an einer Stirnseite des Rahmens 14 eine Handlingseinrichtung 26 auf. Diese ist beispielsweise am Rahmen 14 befestigt. Diese Handlingseinrichtung 26 umfasst eine Tragstruktur 27, welche zumindest eine Greifeinrichtung 28 aufnimmt. Durch diese Handlingseinrichtung 26 ist die zumindest eine Greifeinrichtung 28 oberhalb der Werkstückauflage 16 verfahrbar vorgesehen, um ein Werkstück 12, insbesondere ein plattenförmiges Rohmaterial, der Bearbeitungsmaschine 11 zuzuführen und auf der Werkstückauflage 16 aufzulegen. Des Weiteren ermöglicht die Handlingseinrichtung 26 bearbeitete Werkstückteile, insbesondere Entnahmeteile 30 und Restteile 31 (Figur 9), aufzunehmen und von der Werkstückauflage 16 zu entnehmen oder aus der Bearbeitungsmaschine 11 herauszuführen, um diese in einem nicht näher dargestellten Magazin, Stapel oder Behälter abzulegen. Bei dem Entnahmeteil 30 kann es sich um ein aus dem plattenförmigen Werkstück 12 geschnittenes und/oder gestanztes Werkstückteil handeln. Bei dem Restteil 31 kann es sich um ein Abfallteil oder ein Restgitter oder dergleichen handeln.

Die Werkstückauflage 16 weist ein Tischsegment 33 auf, welches gegenüber der Werkstückauflage 16 nach unten abklappbar ist. Auch kann das Tischsegment 33 nach unten absenkbar sein oder eine kombinierte Bewegung durchführen. Dadurch wird ein Ausschleusen von Entnahmeteilen 30 oder Restteilen 31 oder beidem nach unten ermöglicht.

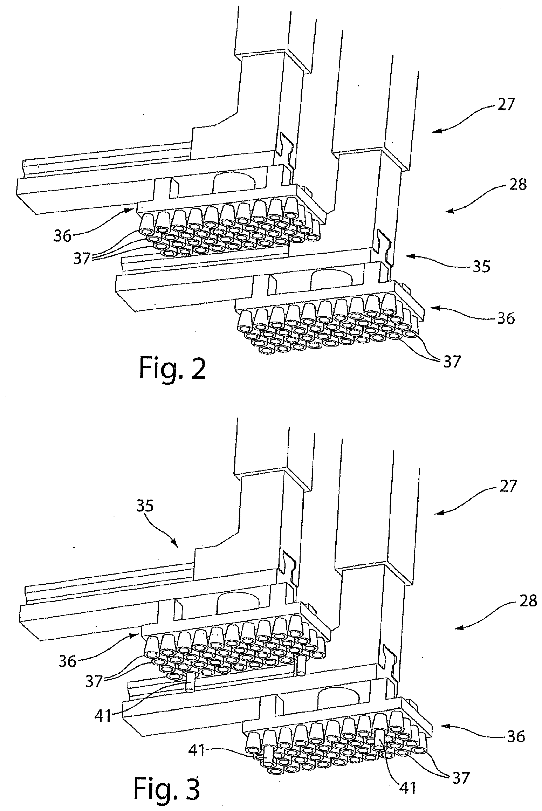

In Figur 2 ist eine perspektivische Ansicht von unten auf die Greifeinrichtung 28 dargestellt. Im Ausführungsbeispiel gemäß Figur 2 umfasst die Greifeinrichtung 28 zwei Greifplatten 36. Jede der Greifplatten 36 umfasst ein oder mehrere Halteelemente 37. Die Halteelemente 37 sind beispielsweise als Saugelemente, insbesondere Vakuumsauger, ausgebildet.

An der Greifplatte 36 sind die Halteelemente 37 beispielsweise in mehreren Reihen und Zeilen zueinander ausgerichtet. Alternativ kann die Greifeinrichtung 28 nur eine Reihe von mehreren hintereinander angeordneten Halteelementen 37 oder nur eine Zeile aufweisen. Vorzugsweise ist die Greifplatte 36 mit einer Vielzahl von Halteelementen 37 ausgebildet, um eine großflächige Haltekraft auf ein zu greifendes Entnahmeteil 30 oder Restteil 31 auszuüben.

Die Greifplatte 36 ist beispielsweise mittels einer Linearführung 35 an der Tragstruktur 27 der Handlingseinrichtung 26 aufgenommen. Diese Linearführung 35 ist in X-Richtung verfahrbar. In Y-Richtung ist die Greifeinrichtung 28 mittels der Tragstruktur 27 entlang einer Linearführung 38 der Handlingseinrichtung 26 verfahrbar. Dadurch kann der Greifbereich der Greifeinrichtung 28 vergrößert werden. Insbesondere sind dadurch die Halteelemente 37 innerhalb des Rahmens 14 der Bearbeitungsmaschine 11 verfahrbar, sodass die Greifeinrichtung 28 unmittelbar benachbart, insbesondere auch in Y-Richtung unmittelbar benachbart, zum Laserbearbeitungskopf 20 und/oder Stanzbearbeitungskopf 21 positionierbar ist.

Die Greifplatte 36 umfasst des Weiteren nicht näher dargestellte Ventile, wobei jedem Halteelement 37 vorzugsweise ein Ventil zugeordnet ist. Dadurch ist jedes Halteelement 37 individuell und separat ansteuerbar. In Abhängigkeit der Handhabungsaufgabe können mehrere Halteelemente 37 gemeinsam angesteuert werden, wodurch individuell anpassbare Greiffelder gebildet sein können.

In Figur 3 ist eine perspektivische Ansicht von unten auf die Greifeinrichtung 28 gemäß Figur 2 dargestellt. Bei dieser Ansicht sind der Greifeinrichtung 28 zugeordnet Drückelemente 41 dargestellt. Diese Drückelemente 41 sind relativ zu den Halteelementen 37 verfahrbar. Die Drückelemente 41 können als Stifte oder als Hülse ausgebildet sein. In der Greifeinrichtung 28 oder der Greifeinrichtung 28 zugeordnet sind wiederum nicht näher dargestellte Ventile vorgesehen, durch welche jedes der Drückelemente 41 unabhängig voneinander und einzeln ansteuerbar ist. Auch können die Drückelemente 41 alle gemeinsam angesteuert oder auch nur gruppenweise oder paarweise angesteuert werden.

Im Ausführungsbeispiel gemäß Figur 3 ist das Drückelement 41 in dem Halteelement 37 - also dem Saugelement - integriert. Das Drückelement 41 ist gegenüber dem aus einem vorzugsweise elastischen Kunststoffbalg gebildeten Saugelement herausfahrbar.

Bei einer Ansteuerung der Halteelemente 37 und der Drückelemente 41 durch das- bzw. dieselben Ventile kann eine Invertierung der Ansteuerung stattfinden, sodass sowohl ein Saugen für die Halteelemente 37 als auch ein Drücken für die Drückelemente 41 angesteuert wird.

Jedes dieser Halteelemente 37 kann ein Drückelement 41 aufweisen. Alternativ kann auch nur ein Drückelement 41 je Greifplatte 36 vorgesehen sein.

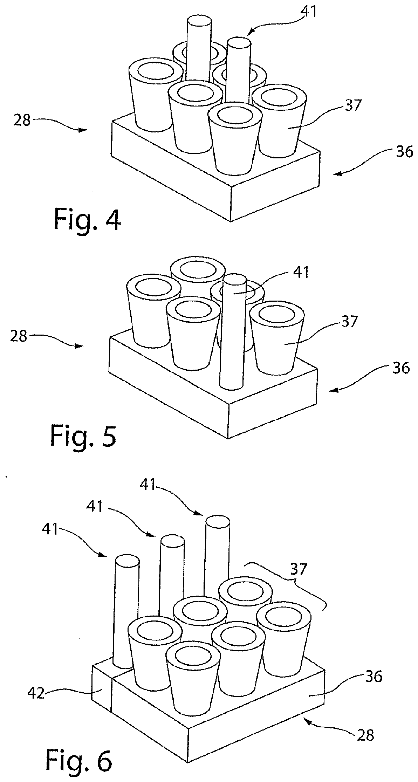

In Figur 4 ist eine alternative Form (nicht Teil der Erfindung) der Greifplatte 36 dargestellt. An der Greifplatte 36 sind beispielsweise zwei Reihen von Halteelementen 37 vorgesehen. Zwischen den beiden Reihen der Halteelemente 37 sind Drückelemente 41 vorgesehen. Diese können auf Lücke zwischen den Halteelementen 37 angeordnet sein. Alternativ können die Drückelemente 41 auch entsprechend der Anzahl der Halteelemente 37 in einer Reihe ausgebildet und dazwischenliegend als eine separate Reihe Drückelemente 41 zwischen zwei Reihen von Halteelementen 37 angeordnet sein.

In Figur 5 ist schematisch eine alternative Ausführungsform der Greifplatte 36 dargestellt. Die Greifplatte 36 weist beispielsweise eine Gruppe von Halteelementen 37 mit einer vorbestimmten Anzahl von Halteelementen 37 auf. Eines der Halteelemente 37 ist gemäß der Erfindung durch ein Drückelement 41 ersetzt.

Eine weitere Form (nicht Teil der Erfindung) der Greifplatte 36 ist in Figur 6 schematisch dargestellt. Die Greifplatte 36 umfasst beispielsweise eine oder zwei Reihen von hintereinander angeordneten Halteelementen 37. An einer Außenseite der Greifplatte 36 ist eine Leiste 42 mit Drückelementen 41 vorgesehen. Diese Leiste 42 mit Drückelementen 41 kann der Anzahl der benachbarten Reihe von Haltelementen 37 entsprechen. Auch kann eine geringere oder größere Anzahl von Drückelementen 41 benachbart zu den Halteelementen 37 der Greifplatte 36 angeordnet sein.

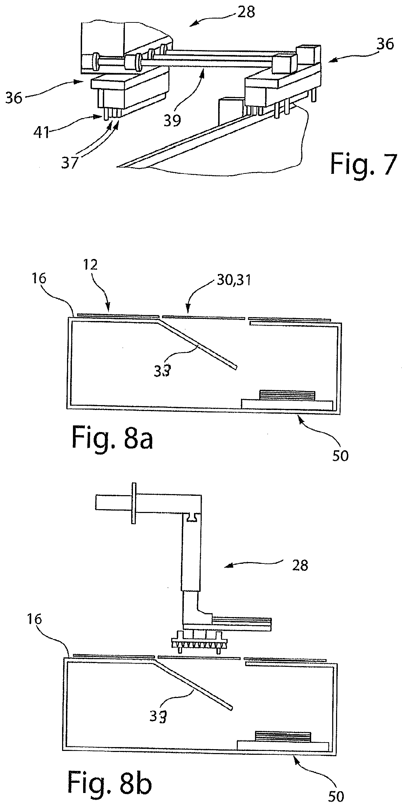

In Figur 7 ist eine Form (nicht Teil der Erfindung) der Greifeinrichtung 28 perspektivisch dargestellt. Beispielsweise sind zwei Greifplatten 36 gemeinsam an einer Tragstruktur 27 angeordnet. Durch eine Linearführung 39 sind die beiden Greifplatten 36 relativ zueinander, insbesondere in einer Ebene parallel zur Werkstückauflage 16, verfahrbar angeordnet. Dadurch kann beispielsweise ein Greiffeld vergrößert sein, in dem die beiden Greifplatten 36 auf einen vorbestimmten Abstand zueinander ausgefahren sind.

Die Ausgestaltung der Greifplatte 36 kann eine der vorbeschriebenen Ausführungsformen umfassen.

In den Figuren 8a und 8b ist eine erste Lösestrategie zum Trennen von zwei Werkstückteilen 30, 31 eines plattenförmigen Materials 12 dargestellt. Die Figur 8a zeigt eine schematische Seitenansicht einer Werkstückauflage 16 mit dem Tischsegment 33. Unterhalb der Werkstückauflage 16 ist ein Magazin 50 positioniert. Das auszuschleusende Werkstückteil beziehungsweise das zu trennende Werkstückteil, welches sowohl das Entnahmeteil 30 als auch das Restteil 31 sein kann, wird zum Tischsegment 33 positioniert. Dies kann beispielsweise über die Halteeinrichtung 17 erfolgen, indem das plattenförmige Material 12 in der Auflageebene entlang der X-Achse verfahren wird. Zum prozesssicheren Ausschleusen nach unten wird die Greifeinrichtung 28 oberhalb dem auszuschleusenden Werkstückteil 30, 31 positioniert und abgesenkt, sodass beispielsweise die Drückelemente 41 auf dem auszuschleusenden Werkstückteil 30, 31 aufliegen. Die Halteelemente 37 können auch aufliegen und beispielsweise das Werkstückteil 30, 31 halten, welches nicht auszuschleusen ist. Die Drückelemente 41 sind eingefahren. Die Greifeinrichtung 28 ist in einer ersten Arbeitsposition, wie dies in Figur 2 dargestellt ist. Darauffolgend kann das Tischsegment 33 nach unten abgeklappt oder abgesenkt werden. Vor, während oder nach dem Abklappen des Tischsegmentes 33 gegenüber der Werkstückauflage 16 werden die Drückelemente 41 aktiviert. Dabei werden die Drückelemente 41 gegenüber den Halteelementen 37 ausgefahren. Das auszuschleusende Werkstückteil 30, 31 wird nach unten gegenüber der Auflageebene der Werkstückauflage 16 ausgedrückt. Dieses ausgeschleuste Werkstückteil 30, 31 gleitet entlang dem Tischsegment 33 nach unten und wird im Magazin 50 aufgefangen. Das Magazin 50 kann auch ein Behälter sein, in dem Entnahmeteile 30 - also Gutteile - als auch Restteile 31 - also Abfallteile - aufgenommen werden können.

Durch die Positionierung der Greifeinrichtung 28 in der Arbeitsposition wird gleichzeitig beim Ausdrücken des zu trennenden Werkstückteils 30, 31 nach unten das auf der Werkstückauflage 16 aufliegende Werkstückteil 30, 31 gehalten. Dadurch kann bei einem gegebenenfalls erfolgenden Verhaken an dem Entnahmeteil 30 und dem Restteil 31 ein sicheres Ausschleusen ermöglicht sein.

Bevorzugt werden nach dem Überführen der Greifeinrichtung 28 in die Arbeitsposition die auf dem nicht auszuschleusenden Werkstückteil 30, 31 aufliegenden Halteelemente 37 aktiviert, sodass das auf der Werkstückauflage 16 aufliegende und nicht auszuschleusende Werkstückteil 30, 31 durch die Halteelemente 37 fixiert gehalten ist.

In den Figuren 9 bis 11 ist schematisch eine Lösestrategie der Greifeinrichtung 28 zum hauptzeitparallelen Trennen dargestellt. In Figur 9 ist eine perspektivische Ansicht der Greifeinrichtung 28 in einer Arbeitsposition auf dem Entnahmeteil 30 und dem Restteil 31 dargestellt. Das Entnahmeteil 30 und Restteil 31 liegen auf der Werkstückauflage 16 auf, die nicht näher dargestellt ist. Nach dem Überführen der Greifeinrichtung 28 in die Arbeitsposition, in welcher die Halteelemente 37 an dem Entnahmeteil 30 und Restteil 31 aufliegen, werden gemäß einer ersten Alternative des Verfahrens die dem Restteil 31 zugeordneten Halteelemente 37 aktiviert, sodass das Restteil 31 durch die Halteelemente 37 der beiden Greifplatten 36 fixiert gehalten ist. Darauffolgend erfolgt zum Trennen des Entnahmeteils 30 von dem Restteil 31 eine Verfahrbewegung der Greifeinrichtung 28 senkrecht nach oben zur Werkstückauflagefläche 16. Vor oder während der Verfahrbewegung werden die Drückelemente 41 aktiviert. Diese fahren gegenüber den Halteelementen 37 aus. Die Aktivierung der Drückelemente 41 ist vorteilhafterweise derart angesteuert, dass das Entnahmeteil 30 auf der Werkstückauflage 16 niedergehalten bleibt. Das Restteil 31 wird demzufolge gegenüber dem Entnahmeteil 30 abgehoben. Nach dieser Trennung von Entnahmeteil 30 und Restteil 31, wie dies in Figur 10 dargestellt ist, kann das Restteil 31 aus der Bearbeitungsmaschine 11 herausgeführt oder in eine weitere Arbeitsstation übergeführt werden. Es kann ein Sortieren des Restteils 31 oder ein Ablegen des Restteils 31 erfolgen. Darauffolgend kann eine manuelle Entnahme des Entnahmeteils 30 von der Werkstückauflage 16 erfolgen. Ebenso kann ein Ausschleusen über ein Tischsegment 33 erfolgen. Des Weiteren kann die Greifeinrichtung 28 das oder die Entnahmeteile 30 greifen und gegebenenfalls sortieren und ablegen.

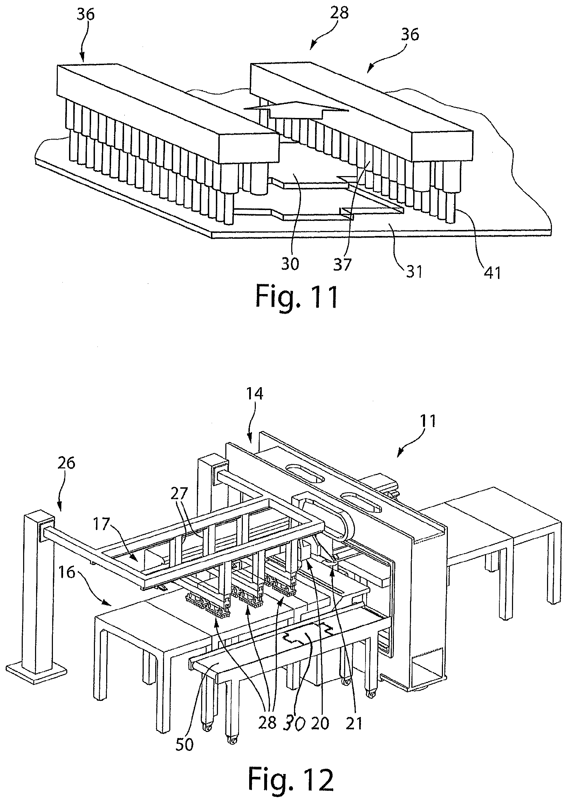

Die Lösestrategie zwischen dem Entnahmeteil 30 und Restteil 31, wie dies in Figur 10 dargestellt ist, kann auch vertauscht erfolgen. Dies ist in Figur 11 dargestellt. Beispielsweise bleibt das Restteil 31 auf der Werkstückauflage 16, und das Entnahmeteil 30 wird durch die Halteelemente 37 vertikal nach oben gegenüber der Werkstückauflage 16 abgehoben.

In Figur 12 ist eine alternative Ausführungsform der Bearbeitungsmaschine 11 zu Figur 1 dargestellt. Abweichend bei dieser Bearbeitungsmaschine 11 ist die Ausführung der Handlingseinrichtung 26. Diese kann als separate Handlingseinrichtung 26 getrennt von dem Grundkörper oder Rahmen 14 der Bearbeitungsmaschine 11 vorgesehen sein. Darüber hinaus können auch mehrere Greifeinrichtungen 28, die eine oder mehrere Greifplatten 36 aufweisen, vorgesehen sein, um plattenförmige Werkstücke 12 oder die Entnahmeteile 30 und/oder Restteile 31 zu handhaben. Des Weiteren ist bei dieser Ausführungsform benachbart zur Werkstückauflage 16 ein Magazin 50 vorgesehen. Dieses kann zur Bereitstellung von Werkstücken 12 dienen. Auf diesem Magazin 50 können auch Entnahmeteile 30 und/oder Restteile 31 abgelegt werden.

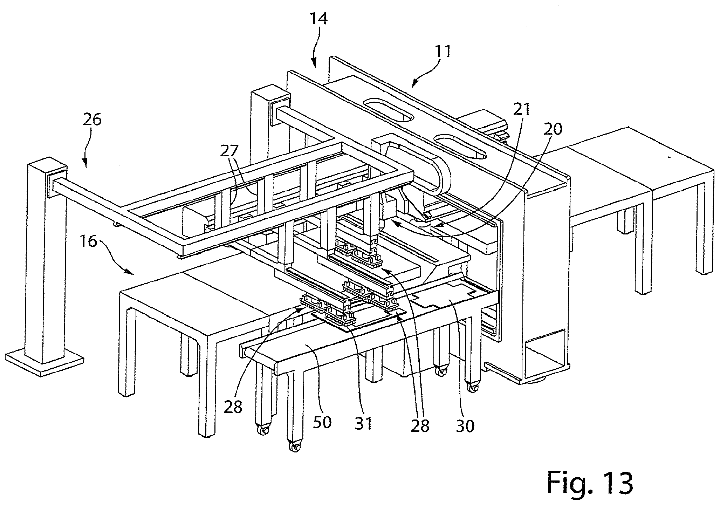

In Figur 13 ist eine perspektivische Ansicht einer Bearbeitungsmaschine 11 gemäß Figur 12 dargestellt, anhand der eine alternative Lösestrategie beschrieben wird.

Die Greifeinrichtung 28 kann mehrere Greiferplatten 36 aufweisen, durch welche zwei zu trennende Werkstücke 30, 31 gegriffen werden können. Alternativ können auch mehrere zu trennende Werkstücke 30, 31 gegriffen werden. Dies kann beispielsweise ein Restteil 31 und mehrere Entnahmeteile 30 sein. Auch kann das Entnahmeteil 30 und Restteil 31, die voneinander zu trennen sind, in einem weiteren Restteil enthalten sein, die aus den zu bearbeitenden plattenförmigen Werkstücken 12 stammen. Bei dieser Mehrteileentnahme ist vorgesehen, dass die Greifeinrichtung 28 in eine Arbeitsposition verfahren wird, die gegenüber der Werkstückauflage 16 verschieden ist. Bevorzugt wird die Greifeinrichtung 28 außerhalb der Werkstückauflage 16 verfahren. Darauffolgend kann gemäß einer ersten Lösestrategie vorgesehen sein, dass beispielsweise das Entnahmeteil 30 durch das vorbeschriebene Verfahren gemäß Figur 10 gelöst wird und auf einem Magazin 50 abgelegt wird. Sofern bereits ein Entnahmeteil 30 auf dem Magazin 50 aufliegt, kann das darauffolgend zu trennende Entnahmeteil 30 positionsgenau auf das bereits in dem Magazin 50 aufliegende Entnahmeteil 30 ebenfalls aufgelegt werden, so dass diese gestapelt werden. Darauffolgend kann die Greifeinrichtung 28 beispielsweise innerhalb des Magazins 50 verfahren werden, so dass darauffolgend das Restteil 31 ebenfalls in analoger Weise zum Entnahmeteil 30 in dem Magazin 50 abgelegt wird. Alternativ kann die Greifeinrichtung 28 auch außerhalb des Magazins 50 verfahren werden, um das Restteil 31 in einem Sammelbehälter oder Auffangbehälter abzulegen. Dabei kann auch vorgesehen sein, dass das Entnahmeteil 30 und/oder Restteil 31 abgeworfen wird, so dass dieses kontrolliert in den Auffang- oder Sammelbehälter fällt.

Diese Mehrteileentnahme weist den Vorteil auf, dass die Durchführung der Trennung der Werkstücke 30, 31 außerhalb der Werkstückauflage 16 erfolgt und außerhalb einer Hauptzeit erfolgen kann. Dies bedeutet, dass zumindest ein Teil des plattenförmigen Werkstücks 12 während der Lösestrategie in der Bearbeitungsmaschine 11 weiter verarbeitet werden kann. Dadurch kann eine Prozesszeitoptimierung erzielt werden.

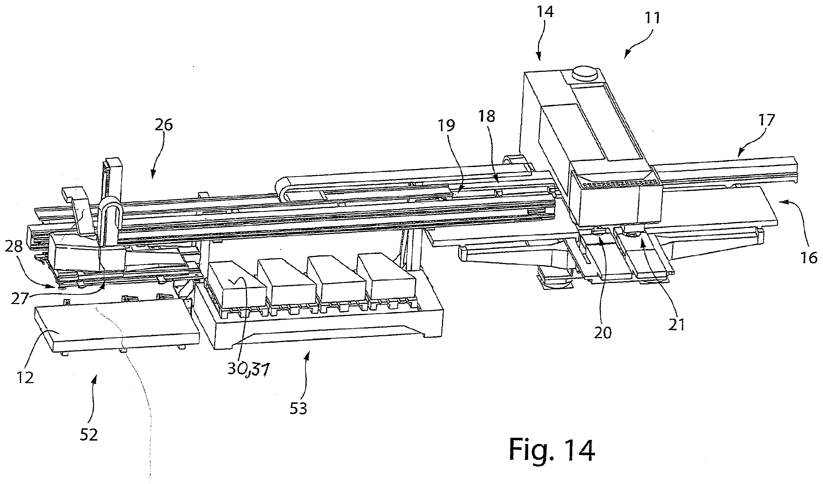

In Figur 14 ist eine weitere alternative Ausführungsform einer Bearbeitungsmaschine 11 bekannt. Diese Bearbeitungsmaschine 11 weicht von der Bearbeitungsmaschine 11 in Figur 1 dahingehend ab, dass das Grundgestell 14 nicht als eingeschlossener, umlaufender Rahmen ausgebildet ist, sondern vielmehr als ein U-förmiger Rahmen ausgebildet ist. In einem vordereren Bereich kann sowohl ein Laserbearbeitungskopf 20 als auch ein Stanzbearbeitungskopf 21 vorgesehen sein. Diese sind insbesondere stationär an dem Rahmen angeordnet. Das plattenförmige Werkstück 16 kann zur Bearbeitung in X-Richtung und/oder Y-Richtung verfahren werden. Die Werkstückauflage 16 und die Halteeinrichtung 17 sind analog zur Bearbeitungsmaschine 11 gemäß Figur 1 ausgeführt. Ergänzend kann diese Bearbeitungsmaschine 11 einer Handlingseinrichtung 26 zugeordnet sein, bei welcher eine Beladestation 52 und eine Entladestation 53 getrennt zueinander und außerhalb der Werkstückauflage 16 angeordnet sind. Die Greifeinrichtung 28 ist mittels der Tragstruktur 27 entlang einer Linearführung zwischen der Beladestation 52, Entladestation 53 und der Werkstückauflage 16 verfahrbar.

## Patentansprüche

1. Verfahren zum gegenseitigen Trennen zweier Werkstückteile eines plattenförmigen Materials (12), insbesondere eines Blechs,
- bei dem die beiden voneinander zu trennenden Werkstückteile (30, 31) auf einer Werkstückauflage (16) gelagert werden,
- bei dem eines der voneinander zu trennenden Werkstückteile als Entnahmeteil (30) und das andere Werkstückteil als Restteil (31) vorgesehen ist,
- bei dem eine Greifeinrichtung (28) in eine Arbeitsposition zu den zu trennenden Werkstückteilen (30, 31) verfahren wird und die Greifeinrichtung (28) ein oder mehrere Greifplatten (36) umfasst, welche jeweils ein oder mehrere Halteelemente (37) aufweisen, durch welche bei deren Aktivierung in der Arbeitsposition der Greifeinrichtung (28) das Entnahmeteil (30) oder das Restteil (30) gehalten wird,
**dadurch gekennzeichnet,**
- **dass** dem oder den Halteelementen (37) ein oder mehrere Drückelemente (41) zugeordnet werden, welche getrennt oder gemeinsam von dem oder den Halteelementen (37) aktiviert werden und deren Wirkrichtung entgegengesetzt zur Haltekraft des zumindest einen Halteelementes (37) ausgerichtet ist, wobei in einem Halteelement (37) ein Drückelement (41) integriert ist oder bei einer Gruppe mit einer vorbestimmten Anzahl von Halteelementen (37), die ein Greiffeld bilden, zumindest ein Halteelement (37) durch zumindest ein Drückelement (41) ersetzt ist,
- **dass** das zumindest eine Halteelement (37) nach dem Positionieren auf dem Entnahmeteil (30) oder dem Restteil (31) aktiviert wird und das Entnahmeteil (30) oder Restteil (31) von der Greifeinrichtung (28) gehalten wird und
- **dass** durch eine Relativbewegung des zumindest einen Halteelementes (37) und des oder der Drückelemente (41) das Entnahmeteil (30) oder das Restteil (31) von dem anderen Werkstückteil (30, 31) getrennt wird, wobei eines der beiden Werkstückteile (30, 31) während der Trennung durch das zumindest eine Halteelement (37) weiterhin gehalten wird,
- **dass** das durch die Halteelemente (37) gehaltene Entnahmeteil (30) oder Restteil (31) in ein Magazin (50) oder in eine weitere Arbeitsstation übergeführt wird.

2. Verfahren nach Anspruch 1, **dadurch gekennzeichnet, dass** das Entnahmeteil (30) oder Restteil (31) mit dem oder den Halteelementen (37) festgehalten und eine Anhebebewegung der Greifeinrichtung (28) senkrecht zur Werkstückauflage (16) angesteuert wird und vor oder während dem Anheben der Greifeinrichtung (28) das oder die Drückelemente (41) ausgefahren werden, sodass das durch zumindest eine Halteelement (37) nicht fixierte andere Werkstückteil (30, 31) durch das oder die Drückelemente (41) zur Werkstückauflage (16) niedergehalten wird.

3. Verfahren nach Anspruch 1, **dadurch gekennzeichnet,**
- **dass** das Entnahmeteil (30) oder Restteil (31) zu einem gegenüber der Werkstückauflage (16) nach unten absenkbaren oder klappbaren Tischsegment (33) in der Werkstückauflage (16) positioniert wird,
- **dass** die Greifeinrichtung (28) mit dem oder den Drückelementen (41) zu dem auszuschleusenden Entnahmeteils (30) oder des auszuschleusenden Restteils (31) ausgerichtet wird,
- **dass** das Tischsegment (33) nach unten abgesenkt oder abgeklappt wird, und
- **dass** die Drückelemente (41) vor, während oder nach dem Absenken des Tischsegmentes (33) ausgefahren werden und das auszuschleusende Entnahmeteil (30) oder das auszuschleusende Restteil (31) gegenüber dem anderen Werkstückteil (31, 30) nach unten ausgedrückt wird, und vorzugsweise nach dem Positionieren des oder der Drückelemente (41) der Greifeinrichtung (28) zu dem auszuschleusenden Entnahmeteil (30) oder dem auszuschleusenden Restteil (31) die Halteelemente (37) an dem nicht auszuschleusenden Werkstückteil (31, 30) angelegt und aktiviert werden und anschließend das Absenken oder Abklappen des Tischsegmentes (33) angesteuert wird, wobei das Ausfahren der Drückelemente (41) vor, während oder nach dem Absenken oder Abklappen des Tischsegments (33) angesteuert wird,

4. Verfahren nach einem der vorhergehenden Ansprüche, **dadurch gekennzeichnet, dass** zumindest die voneinander zu trennenden Werkstückteile (30, 31) durch die Greifeinrichtung (28) gehalten werden, dass die Greifeinrichtung (28) außerhalb der Werkstückauflage (16) in eine weitere Arbeitsposition verfahren wird und die Werkstückteile (30, 31) in der zumindest einen weiteren Arbeitsposition getrennt werden, insbesondere in einem Magazin (50) gestapelt und/oder in zumindest einem Auffangbehälter abgelegt werden.

5. Greifeinrichtung für eine Handlingsvorrichtung (26) einer Bearbeitungsmaschine (11) für plattenförmige Werkstücke (12),
- mit einer oder mehreren Greifplatten (36), die ein oder mehrere Halteelemente (37) aufweisen, welche zum Halten eines Werkstücks (30, 31) aktivierbar sind,
**dadurch gekennzeichnet,**
**dass** dem zumindest einen Halteelement (37) ein oder mehrere Drückelemente (41) zugeordnet sind, und das zumindest eine Halteelement (37) und das zumindest eine Drückelemente (41) relativ zueinander verfahrbar an der Greifplatte (36) vorgesehen und gemeinsam oder getrennt voneinander ansteuerbar sind, wobei in einem Halteelement (37) ein Drückelement (41) integriert ist oder bei einer Gruppe mit einer vorbestimmten Anzahl von Halteelementen (37), die ein Greiffeld bilden, zumindest ein Halteelement (37) durch zumindest ein Drückelement (41) ersetzt ist.

6. Greifeinrichtung nach Anspruch 5, **dadurch gekennzeichnet, dass** jedes Drückelement (41) und jedes Halteelement (37) unabhängig voneinander und separat ansteuerbar ist.

7. Greifeinrichtung nach einem der Ansprüche 5 bis 6, **dadurch gekennzeichnet, dass** zwei oder mehrere Greifplatten (36) in einer Greifebene relativ zueinander mit einer Linearführung (38) verfahrbar sind und die Greiffläche vergrößerbar oder die Greifposition der Greifplatten (36) zueinander veränderbar ist.

8. Greifeinrichtung nach einem der Ansprüche 5 bis 7, **dadurch gekennzeichnet, dass** die Greifplatte (36) als Greifleiste ausgebildet ist, welche wenigstens eine Reihe von Halteelementen (37) und eine Reihe von Drückelementen (41) umfasst.

9. Greifeinrichtung nach einem der Ansprüche 5 bis 8, **dadurch gekennzeichnet, dass** das Halteelement (37) als ein Saugelement, insbesondere ein Vakuumsauger, ausgebildet ist, welches mit einem Ventil ansteuerbar ist und vorzugsweise das Saugelement aus einem elastischen Kunststoffbalg ausgebildet ist.

10. Greifeinrichtung nach einem der Ansprüche 5 bis 9, **dadurch gekennzeichnet, dass** die Drückelemente (41) als ausfahrbare Stifte oder Hülsen ausgebildet sind, welche vorzugsweise jeweils durch ein Ventil ansteuerbar sind.

11. Handlingsvorrichtung für eine Bearbeitungsmaschine (11) für plattenförmige Werkstücke (12), insbesondere Bleche, mit einer Tragstruktur (27), **dadurch gekennzeichnet, dass** an der Tragstruktur (27) eine Greifeinrichtung (28) nach einem der Ansprüche 5 bis 10 vorgesehen ist.

## Claims

1. A method for mutually separating two workpiece parts of a plate-shaped material (12), in particular a metal sheet,
- in which the two workpiece parts (30, 31) to be separated are placed on a workpiece support (16)
- in which one of the workpiece parts to be separated is provided as a removal part (30) and the other workpiece part is provided as a residual part (31),
- in which a gripping device (28) is displaced into a working position with respect to the workpiece parts (30, 31) to be separated and in which said gripping device (28) comprises one or more gripping plates (36) having each one or more retention members (37) which, when activated, retain the removal part (30) or the residual part (30) while the gripping device (28) is in its working position, **characterised in that**
- one or more pushing members (41) are associated with said retention member(s) (37) and are activated separately or jointly with the retention member(s) (37), and **in that** their action is oriented in a direction which opposes the retention force of the at least one retention member (37), a pushing member (41) being integrated into one retention member (37) or, in the case of a group consisting of a predetermined number of retention members (37) forming a gripping field, at least one retention member (37) is replaced by at least one pushing member (41),
- the at least one retention member (37) is activated once it has been positioned on the removal part (30) or on the residual part (31) and the removal part (30) or the residual part (31) is gripped and retained by the gripping device (28), and
- the removal part (30) or the residual part (31) is separated from the respective other workpiece part (30, 31) by a relative movement between the at least one retention member (37) and the pushing member(s) (41), while during the separation process one of the two workpiece parts (30, 31) continues to be retained by the at least one retention member (37),
- the removal part (30) or the residual part (31) retained by the retention members (37) is transferred to a storage hopper (50) or to another processing station.

2. The method as claimed in claim 1, **characterised in that** the removal part (30) or the residual part (31) is retained by the retention member (s) (37) and a lifting movement of the gripping device (28) in a direction perpendicular to the workpiece support (16) is activated, and **in that** prior to, or concurrently with the lifting of the gripping device (28), the pushing member(s) (41) is/are extended so that said other workpiece part (30, 31) which is not fixed in place by the at least one retention member (37) is pressed down against the workpiece support (16) by the pushing member(s) (41).

3. The method as claimed in claim 1, **characterised in that**
- the removal part (30) or the residual part (31) is positioned with respect to a table segment (33) formed in the workpiece support (16) and capable of being lowered or folded down relative to said workpiece support (16),
- the gripping device (28) is oriented such that the pushing members (41) are facing the removal part (30) to be channelled out or the residual part (31) to be channelled out,
- the table segment (33) is moved down or folded down, and
- the pushing members (41) are extended prior to, concurrently with, or subsequent to the lowering of the table segment (33) and the removal part (30) to be channelled out or the residual part (31) to be channelled out, is ejected towards the bottom with respect to the other workpiece part (31, 30), and **in that** preferably once the pushing member(s) (41) of the gripping device (28) has/have been positioned with respect to the removal part (30) to be channelled out or to the residual part (31) to be channelled out, the retention members (37) are applied to the workpiece part (31, 30) which is not to be channelled out and are activated, and **in that** subsequently the lowering or folding down of the table segment (33) is activated, the extension of the pushing members (41) being activated prior to, concurrently with, or subsequent to the lowering or folding down of the table segment (33).

4. The method as claimed in any of the preceding claims, **characterised in that** at least the workpiece parts (30, 31) to be mutually separated are retained by the gripping device (28), **in that** the gripping device (28) is moved to a further working position outside the workpiece support (16), and **in that** the workpiece parts (30, 31) are separated while being in said at least one further working position and are, in particular, stacked in a storage hopper (50) and/or deposited in at least one collecting receptacle.

5. A gripping device for a handling device (26) of a processing machine (11) for processing plate-shaped workpieces (12),
- having a one or more gripping plates (36) that are provided with one or more retention members (37) which may be activated for holding a workpiece (30, 31),
**characterised in that** one or more pushing members (41) are associated with said at least one retention member (37) and **in that** the at least one retention member (37) and the at least one pushing member (41) are provided on said gripping plate (36) in such a manner as to be displaceable relative to each other and **in that** they may be activated jointly or separately from each other, a pushing member (41) being integrated into one retention member (37) or, in the case of a group consisting of a predetermined number of retention members (37) forming a gripping field, at least one retention member (37) is replaced by at least one pushing member (41).

6. The gripping device as claimed in claim 5, **characterised in that** each pushing member (41) and each retention member (37) may be activated separately and independently from any other one.

7. The gripping device as claimed in any one of claims 5 to 6, **characterised in that** two or several gripping plates (36) may be displaced relative to each other in a gripping plane by using a linear guide (38) and **in that** the gripping surface is scalable or the gripping positions of the gripping plates (36) may be varied relative to each other.

8. The gripping device as claimed in any one of claims 5 to 7, **characterised in that** the gripping plate (36) is realised in the form of a gripping strip which comprises at least one row of retention members (37) and one row of pushing members (41).

9. The gripping device as claimed in any one of claims 5 to 8, **characterised in that** the retention member (37) is realised in the form of a suction element, in particular a vacuum suction cup, which may be activated by means of a valve and **in that** said suction element is preferably realised in the form of an elastic plastic bellows.

10. The gripping device as claimed in any one of claims 5 to 9, **characterised in that** the pushing members (41) are realised in the form of extendable pins or sleeves which may each be activated preferably by means of a valve.

11. A handling device for a processing machine (11) for processing plate-shaped workpieces (12), in particular, metal sheets, said handling device having a support structure (27), **characterised in that** on said support structure (27) is provided with a gripping device (28) as claimed in any one of claims 5 to 10.

## Revendications

1. Procédé destiné à séparer l'une de l'autre deux parties de pièce d'un matériau (12) en forme de plaque, en particulier d'une tôle,
- lors duquel les deux parties de pièce (30, 31) à séparer l'une de l'autre sont posées sur un porte-pièce (16),
- lors duquel l'une des parties de pièce à séparer l'une de l'autre est prévue en tant que partie à prélever (30) et l'autre partie de pièce est prévue en tant que partie restante (31),
- lors duquel un dispositif de préhension (28) est déplacé dans une position de travail par rapport aux parties de pièce (30, 31) à séparer et le dispositif de préhension (28) comprend une ou plusieurs plaques de préhension (36) qui présentent respectivement un ou plusieurs éléments de maintien (37) grâce auxquels, lorsqu'ils sont activés dans la position de travail du dispositif de préhension (28), la partie à prélever (30) ou la partie restante (30) est maintenue en place,
**caractérisé en ce que**
- audit élément ou auxdits éléments de maintien (37) sont affectés un ou plusieurs éléments presseurs (41) qui sont activés de manière séparée ou simultanée par ledit ou lesdits éléments de maintien (37) et dont le sens d'action est orienté de manière opposée à la force de maintien dudit au moins un élément de maintien (37), un élément presseur (41) étant intégré dans un élément de maintien (37) ou au moins un élément de maintien (37) étant remplacé par au moins un élément presseur (41) dans un groupe constitué d'un nombre prédéterminé d'éléments de maintien (37) qui forme un champ de préhension,
- ledit au moins un élément de maintien (37) est activé après avoir été positionné sur la partie à prélever (30) ou la partie restante (31), et la partie à prélever (30) ou la partie restante (31) est maintenue par le dispositif de préhension (28) et
- la partie à prélever (30) ou la partie restante (31) est séparée de l'autre partie de pièce (30, 31) par un mouvement relatif entre ledit au moins un élément de maintien (37) et le ou les éléments presseurs (41), l'une des deux parties de pièce (30, 31) continuant à être maintenue par ledit au moins un élément de maintien (37) pendant l'opération de séparation,
- la partie à prélever (30) ou la partie restante (31) maintenue par les éléments de maintien (37) étant transférée dans un magasin (50) ou dans une autre station d'usinage.

2. Procédé selon la revendication 1, **caractérisé en ce que** la partie à prélever (30) ou la partie restante (31) est maintenue en place par le ou les éléments de maintien (37) et **en ce qu'**un mouvement de déplacement vers le haut du dispositif de préhension (28) effectué de manière perpendiculaire au porte-pièce (16) est activé et que, avant ou pendant ledit déplacement vers le haut du dispositif de préhension (28), le ou les éléments presseurs (41) sont sortis de sorte que l'autre partie de pièce (30, 31) qui n'est pas fixée par au moins un élément de maintien (37) est maintenue pressée vers le bas par rapport au porte-pièce (16) par le ou les éléments presseurs (41) .

3. Procédé selon la revendication 1, **caractérisé en ce que**
- la partie à prélever (30) ou la partie restante (31) est positionnée par rapport à un segment de table (33) qui est situé dans le porte-pièce (16) et qui peut être abaissé ou rabattu par rapport audit porte-pièce (16),
- le dispositif de préhension (28) avec le ou les éléments presseurs (41) est orienté vers la partie à prélever (30) qui doit être éjectée ou la partie restante (31) qui doit être éjectée,
- le segment de table (33) est abaissé ou rabattu, et
- les éléments presseurs (41) sont sortis avant, pendant ou après l'abaissement du segment de table (33) et la partie à prélever (30) qui doit être éjectée ou la partie restante (31) qui doit être éjectée est séparée de l'autre partie de pièce (31, 30) en étant pressée vers le bas par ceux-ci et **en ce que**, de préférence après le positionnement dudit ou desdits éléments presseurs (41) du dispositif de préhension (28) par rapport à la partie à prélever (30) qui doit être éjectée ou à la partie restante (31) qui doit être éjectée, les éléments de maintien (37) sont posés sur la partie de pièce (31, 30) qui ne doit pas être éjectée et sont activés, et puis l'abaissement ou le rabattement du segment de table (33) est activé, la sortie des éléments presseurs (41) étant activée avant, pendant ou après l'abaissement ou le rabattement du segment de table (33) .

4. Procédé selon l'une quelconque des revendications précédentes, **caractérisé en ce qu'**au moins les parties de pièce (30, 31) à séparer l'une de l'autre sont maintenues par le dispositif de préhension (28), que le dispositif de préhension (28) est déplacé en dehors du porte-pièce (16), dans une autre position de travail et que les parties de pièce (30, 31) sont séparées dans ladite au moins une autre position de travail, en particulier empilées dans un magasin (50) et/ou déposées dans au moins un bac de récupération.

5. Dispositif de préhension pour un dispositif de manipulation (26) d'une machine d'usinage (11) pour pièces (12) en forme de plaque,
- pourvu d'une ou de plusieurs plaques de préhension (36) qui présentent un ou plusieurs éléments de maintien (37) qui peuvent être activés en vue de maintenir une pièce (30, 31),
**caractérisé en ce qu'**audit moins un élément de maintien (37) sont affectés un ou plusieurs éléments presseurs (41) et **en ce que** ledit au moins un élément de maintien (37) et ledit au moins un élément presseur (41) sont prévus sur la plaque de préhension (36) de manière à pouvoir se déplacer relativement l'un par rapport à l'autre et peuvent être activés séparément l'un de l'autre ou de manière simultanée, un élément presseur (41) étant intégré dans un élément de maintien (37), ou au moins un élément de maintien (37) étant remplacé par au moins un élément presseur (41) dans un groupe constitué d'un nombre prédéterminé d'éléments de maintien (37) qui forme un champ de préhension.

6. Dispositif de préhension selon la revendication 5, **caractérisé en ce que** chaque élément presseur (41) et chaque élément de maintien (37) peuvent être activés indépendamment l'un de l'autre et de manière séparée.

7. Dispositif de préhension selon l'une quelconque des revendications 5 à 6, **caractérisé en ce que** deux ou plusieurs plaques de préhension (36) peuvent être déplacées relativement entre elles dans un plan de préhension grâce à un guide linéaire (38) et **en ce que** la surface de préhension peut être agrandie ou que la position de préhension des plaques de préhension (36) les unes par rapport aux autres peut être modifiée.

8. Dispositif de préhension selon l'une quelconque des revendications 5 à 7, **caractérisé en ce que** la plaque de préhension (36) est réalisée en tant que barre de préhension qui comprend au moins une rangée d'éléments de maintien (37) et une rangée d'éléments presseurs (41).

9. Dispositif de préhension selon l'une quelconque des revendications 5 à 8, **caractérisé en ce que** l'élément de maintien (37) est réalisé sous la forme d'un élément d'aspiration, en particulier une ventouse à vide, lequel peut être activé par une valve et que de préférence l'élément d'aspiration est réalisé à partir d'un soufflet en matière plastique élastique.

10. Dispositif de préhension selon l'une quelconque des revendications 5 à 9, **caractérisé en ce que** les éléments presseurs (41) sont réalisés en tant que broches ou douilles pouvant être sorties, lesquelles peuvent de préférence être respectivement activées par une valve.

11. Dispositif de manipulation pour une machine d'usinage (11) pour pièces (12) en forme de plaque, en particulier pour tôles, pourvu d'une structure porteuse (27), **caractérisé en ce que** sur la structure porteuse (27) est prévu un dispositif de préhension (28) selon l'une quelconque des revendications 5 à 10.
